# FASCICULE DE BREVET EUROPEEN

(11) **EP 2 780 193 B1**
(45) Date de publication et mention de la délivrance du brevet: **16.12.2015**
(21) Numéro de dépôt: 12794410.6
(22) Date de dépôt: 30.10.2012
(51) Int. Cl.: B60N 2/68, B60N 2/70, B60N 2/72

(54) **ARMATURE DE SIEGE AVEC NAPPE DE SUPPORT A FERMETE AJUSTABLE**
SITZRAHMEN MIT TRÄGERSCHICHT MIT VERSTELLBARER HÄRTE
SEAT FRAMEWORK WITH SUPPORT LAYER OF ADJUSTABLE FIRMNESS

(30) Priorité: 15.11.2011 FR 1160378
(43) Date de publication de la demande: 24.09.2014
(73) Titulaire: Peugeot Citroën Automobiles SA, 78140 Vélizy Villacoublay (FR)
(72) Inventeur: DAVID, Eric, F-92290 Chatenay Malabry (FR); GUILLOT, Herve, F-78990 Elancourt (FR)
(74) Mandataire: Jeannin, Laurent Jean-Pierre
(86) Numéro de dépôt international: PCT/FR2012/052509
(87) Numéro de publication internationale: WO 2013/072595

(56) Documents cités:
- EP-A1- 1 593 547
- FR-A1- 2 912 965
- US-A- 5 316 371

## Description

L'invention se situe dans le domaine des sièges pour véhicules automobiles de type comportant une armature et une matelassure. Plus particulièrement, elle concerne les armatures de sièges aptes à être montés dans l'habitacle d'un véhicule par exemple un véhicule automobile.

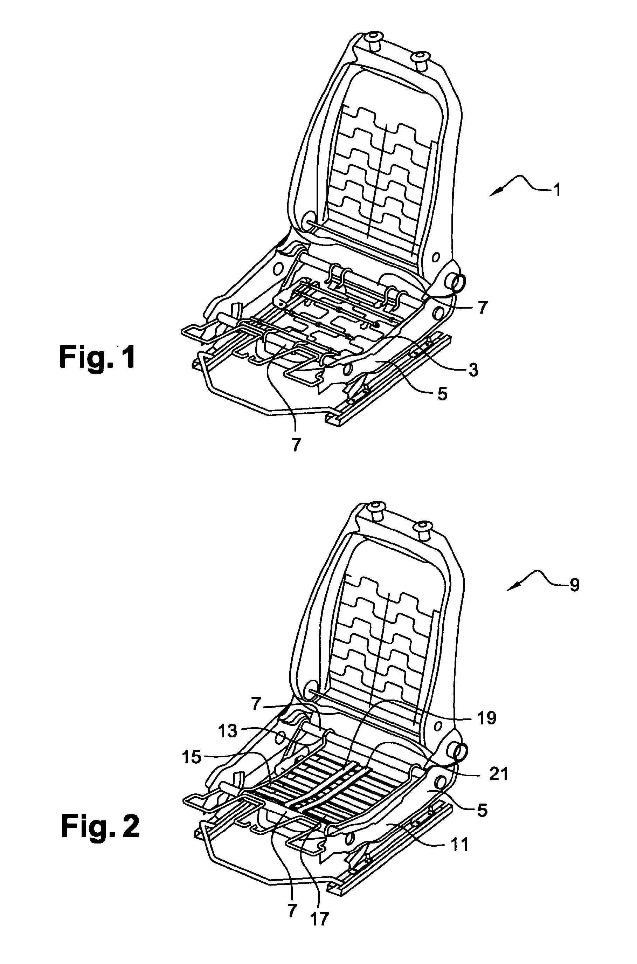

Ainsi qu'illustré à la figure 1, les sièges (1) sont composés de plusieurs éléments, une structure appelée armature (5) qui va garantir la robustesse du siège, des matelassures (non représentées) de coussin d'assise et de dossier pour le confort de l'occupant et un revêtement, par exemple du textile, pour l'aspect visuel du siège. L'armature (5) participe également au confort de l'occupant par l'intermédiaire des nappes d'assise (3) et de dossier. Ces nappes (3) se situent sous les mousses de sièges et contribuent à la souplesse du siège. Les nappes d'assise (3), de structure filaire, sont par exemple montées suspendues à deux barres (7) transversales de l'armature (5).

Le document FR2912965 décrit un exemple d'armature de support pour dossier de siège automobile dans lequel les extrémités des fils composant les nappes filaires sont solidarisées au cadre rigide de l'armature. Les fils sont par ailleurs entrecroisés pour former une structure répartissant les efforts et permettant d'accroître le confort de l'utilisateur. Cette structure présente cependant l'inconvénient de ne pas être adaptable et d'être spécifique en termes de souplesse à un véhicule ou une gamme de véhicule donnée.

Il est en effet connu de proposer des sièges présentant des types de maintien différents, adaptés à la gamme du véhicule sur lequel ils sont destinés à être embarqués. Par exemple, une voiture sportive sera dotée de sièges présentant un maintien plus ferme que ceux d'une voiture familiale. Cette adaptation de la fermeté des sièges requiert l'emploi de nappes spécifiques, voire de matelassures différentes. Une adaptation des nappes et/ou des matelassures est également nécessaire selon le type de revêtement utilisé. Par exemple, lorsque les sièges sont recouverts de cuir, on emploie une matelassure plus fine que lorsqu'ils sont recouverts de tissu afin de conserver la même hauteur d'assise. De même, lorsque les sièges sont recouverts de cuir, on emploie généralement une nappe de support plus souple que lorsqu'ils sont recouverts de tissu. La spécificité des matelassures et/ou des nappes présente un coût de fabrication, de stockage et de conditionnement. Il existe donc un besoin pour une solution plus économique s'affranchissant de cette exigence de spécificité tout en conservant la possibilité de proposer différents types de maintien ou une même hauteur d'assise pour différents types de revêtements.

On notera qu'il est déjà connu du document US5316371 une nappe d'assise à lattes permettant de rendre les sièges ajustables en hauteur. Pour ce faire les lattes sont montées entre deux barres transversales et disposées selon une orientation sensiblement longitudinale par rapport au véhicule. Au moins une des barres transversales est mobile en translation ce qui permet d'augmenter ou de diminuer l'écartement entre les barres. Une diminution de l'écartement va arquer les lattes ce qui augmentera la hauteur d'assise. Néanmoins cette modification de la hauteur d'assise se répercute sur le revêtement qui doit alors présenter une certaine extensibilité au risque de voir une diminution de la hauteur d'assise former des plis disgracieux sur ledit revêtement ce qui nuirait à la qualité perçue du siège. Cette solution n'est donc pas compatible avec touts les types de revêtements. Par ailleurs, elle implique un profil bombé de l'assise ce qui ne correspond pas toujours aux demandes de style dans l'habitacle d'un véhicule. Il serait donc intéressant de pouvoir jouer sur la hauteur d'assise du siège lorsqu'il est occupé sans modifier celle-ci lorsque celui-ci est inoccupé.

L'invention a pour objectifs d'apporter une réponse aux inconvénients présentés par l'art antérieur en proposant un nouveau type d'armature, et en particulier de nappe de support, présentant à la fois les avantages de la standardisation et pouvant être adapté aux différentes destinations du siège.

A cet effet, l'invention a pour objet une armature de siège pour véhicule, de préférence automobile, comprenant au moins une nappe de support à lattes, remarquable en ce que les lattes sont reliées entre elles par au moins une réglette mobile en translation le long desdites lattes.

Selon des modes particuliers de réalisation, l'ensemble peut comprendre une ou plusieurs des caractéristiques suivantes, prises isolément ou selon toutes les combinaisons techniquement possibles :
- Les lattes sont reliées entre elles par au moins deux réglettes mobiles en translation le long des lattes ;
- La ou les réglettes sont rigides ;
- La ou les réglettes sont mobiles entre une position centrale d'extrémité, à savoir au centre des lattes, et une position latérale d'extrémité, à savoir aux extrémités des lattes, et peuvent adopter toutes les positions intermédiaires entre les deux.
- Les lattes présentent au moins un marqueur de position pour le prépositionnement de la ou des réglettes, de préférence, au moins un marqueur comprend un relief s'opposant au déplacement d'au moins une réglette.
- Les lattes et/ou la ou les réglettes sont en matériau plastique.
- La ou les nappes de support sont une nappe d'assise et/ou une nappe de dossier.
- La nappe de support est suspendue à des éléments transversaux de ladite armature et les lattes sont disposées transversalement par rapport au siège. Les réglettes d'ajustement sont disposées perpendiculairement aux lattes.
- L'armature comprend en outre des moyens d'entraînement de la ou des réglettes coopérant avec des moyens complémentaires présentés par la ou lesdites réglettes de sorte à déplacer la ou les réglettes en translation le long des lattes, de préférence les moyens d'entraînement comprennent au moins une tige filetée.
- L'armature comprend au moins deux réglettes et les moyens d'entrainement sont configurés pour déplacer les réglettes de manière symétrique selon des sens opposés de sorte à modifier leur écartement.
- Les moyens d'entraînement sont actionnables manuellement, de préférence au moyen d'une molette.
- Les moyens d'entrainement sont motorisés et actionnables au moyen d'une commande située sur le tableau de bord du véhicule dans lequel le siège est embarqué ou sur le siège.

L'invention a également pour objet un siège comprenant une armature telle que définie plus haut.

Enfin l'invention a pour objet un véhicule comprenant au moins un siège tel que défini plus avant.

On aura compris à la lecture de la définition qui vient d'en être donnée que l'invention consiste à remplacer les traditionnelles armatures filaires par des nappes de support comprenant des lattes et un système d'ajustement de sa dureté. Les lattes de la nappe de support se comportent comme des ressorts et fléchissent sous la pression exercée par le poids d'un passager lorsqu'il va s'assoir dessus ou s'y adosser. Pour une pression donnée, l'amplitude de cette flexion va définir la fermeté, ou la souplesse, présentée par la nappe. L'amplitude de flexion va également définir, pour une pression donnée, la hauteur d'assise présentée par le siège lorsqu'il est occupé. L'invention consiste à relier les lattes par au moins une réglette d'ajustement, et de préférence au moins deux réglettes d'ajustement, qui vont répartir l'effort de résistance à la pression sur l'ensemble des lattes. La répartition ou non de l'effort entre les lattes permet de modifier l'amplitude de flexion pour une pression donnée. Il est donc possible de faire varier la fermeté présentée par la nappe de support. Il est également possible de faire varier la hauteur d'assise présentée par le siège en utilisation sans pour autant faire varier sa hauteur d'assise à vide. De préférence, la ou les réglettes sont rigides. La ou les réglettes vont par ailleurs maintenir les lattes selon un écartement fixe, telles des entretoises.

Selon un mode de réalisation préféré de l'invention, les lattes sont reliées par au moins deux réglettes d'ajustement. Lorsque deux réglettes sont en jeu, elles sont disposées préférentiellement symétriquement de part et d'autre d'un axe passant par les milieux des lattes, selon une direction transversale auxdites lattes. Lorsque les réglettes d'ajustement sont placées proches de cet axe central, dans une position centrale d'extrémité, les possibilités de flexion des lattes sont restreintes. Les lattes présentent une résistance importante à la pression et donc la nappe de support présente un maintien ferme. Lorsque les réglettes d'ajustement sont placées proches des extrémités des lattes (et donc éloignées de l'axe central), dans une position latérale d'extrémité, les possibilités de flexion des lattes sont peu ou pas influencées par la présence desdites réglettes. Les lattes présentent moins de résistance à la pression et donc la nappe de support présente un maintien souple. Les réglettes peuvent adopter toutes les positions intermédiaires entre leurs positions centrale et latérale d'extrémité définissant différents types de maintien. Avantageusement, la transition du maintien de la nappe de support de ferme à souple (ou inversement) se fait progressivement en fonction de la distance d'écartement entre les réglettes d'ajustement. En d'autres termes, l'invention permet de modifier le débattement possible des lattes en fonction d'une pression donnée et donc de modifier la rigidité présentée par la nappe de support. L'invention est remarquable en ce qu'une même nappe de support, fabriquée de manière standard, est adaptable en souplesse (ou fermeté) et permet d'offrir différents types de maintien. L'invention est remarquable en ce qu'une même nappe de support peut présenter différentes hauteurs d'assise pour une pression donnée sans pour autant modifier sa hauteur d'assise à vide. On notera que l'invention ne va pas modifier l'écartement entre les extrémités des lattes et ne fait pas varier la hauteur d'assise à vide, mais modifie la position des réglettes reliant ces lattes pour faire varier la souplesse de la nappe de support et en conséquent la hauteur d'assise lorsque le siège est occupé.

Selon un exemple de réalisation de l'invention le positionnement des réglettes est fixe et déterminé au moment de la réalisation du siège. Selon un autre exemple, les réglettes restent mobiles et leur déplacement est autorisé lorsque le siège est en utilisation dans le véhicule.

L'invention sera mieux comprise et d'autres aspects et avantages apparaîtront clairement à la lecture de la description des exemples de réalisation qui suit donnée en référence aux dessins annexés sur lesquels :
- La figure 1 est une vue d'une armature de siège selon l'art antérieur
- La figure 2 représente une armature de siège selon l'invention.
- La figure 3 présente une vue d'une nappe à lattes avec réglettes d'ajustement selon une première position des réglettes
- La figure 4 présente une vue d'une nappe à lattes avec réglettes d'ajustement selon une deuxième position des réglettes.

La figure 1 ayant déjà été commentée dans la partie introductive on se référera maintenant à la figure 2 présentant une armature de siège (9) selon l'invention dont une nappe de support, à savoir la nappe d'assise, est une nappe à fermeté ajustable selon l'invention. On notera au passage que l'application de l'invention aux nappes d'assise ne saurait être limitative et que l'invention s'applique également à d'autres types de nappes comme par exemple les nappes de dossier de siège.

Au niveau de l'assise, l'armature (5) se compose principalement d'un cadre extérieur (11), en tôle d'acier ou en un autre matériau présentant des propriétés mécaniques analogues. Ce cadre (11) est ouvert dans sa partie centrale où il reçoit la nappe d'assise. Le cadre (11) comprend également des moyens permettant d'articuler le dossier du siège et/ou d'avancer ou de reculer le siège selon la direction longitudinale du véhicule. La structure et la mise en oeuvre de ces moyens sont connues de l'homme du métier et ne sont donc pas décrites plus avant dans le présent mémoire.

Le cadre (11) comprend deux barres transversales (7) qui vont supporter la nappe d'assise. La nappe d'assise comprend un ensemble de lattes (17) par exemple en matériau plastique, qui sont disposées parallèlement aux barres transversales (7). Les lattes (17) sont disposées selon une orientation transversale par rapport au siège, mais une autre orientation est également envisageable. Les lattes (17) sont reliées à leurs extrémités à des éléments (15) de structure. Des crochets de soutien (13) permettent de relier les éléments de structure (15) aux barres transversales (7). La nappe d'assise est suspendue par les crochets (13) aux barres transversales (7).

Deux réglettes (19, 21) d'ajustement relient les lattes (17) entre elles. Ces réglettes (19, 21) sont disposées perpendiculaires aux lattes (17). De préférence, les réglettes (19, 21) d'ajustement sont rigides et présentent régulièrement espacés sur leur longueur un nombre d'évidements équivalent au nombre de lattes (17) et destinés à être traversés par lesdites lattes (17).

Les réglettes (19, 21) d'ajustement sont mobiles en translation le long des lattes (17) entre deux positions d'extrémité et peuvent prendre toutes les positions intermédiaires entre ces deux positions. Le positionnement de ces réglettes (19, 21) permet de modifier la résistance à la pression de la nappe et donc le confort résiduel pour l'occupant du siège et/ou la hauteur d'assise du siège.

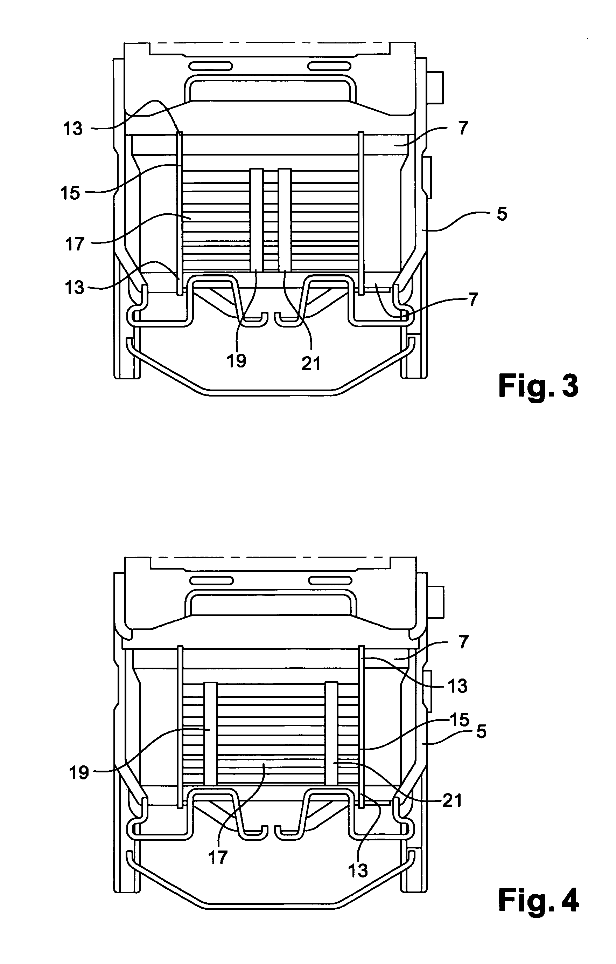

La figure 3 présente une première position d'extrémité, dite position centrale d'extrémité où les réglettes (19, 21) d'ajustement sont disposées rapprochées l'une de l'autre dans une position centrale par rapport à la longueur des lattes (17). Ce positionnement des réglettes (19, 21) au centre de la nappe, c'est-à-dire sous le fessier de l'occupant permet de limiter le débattement des lattes (17) plastiques et donc de rigidifier l'ensemble de la nappe d'assise. Une telle configuration sera par exemple utilisée pour les sièges destinés à des véhicules dynamiques ou sportifs.

A l'inverse, ainsi qu'illustré sur la figure 4, il est possible de positionner les réglettes (19, 21) d'ajustement aux extrémités des lattes (17). Cette configuration ne limite pas ou peu la flexibilité de la nappe d'assise qui conserve sa souplesse. Ce positionnement des réglettes (19, 21) sera par exemple choisi pour les sièges privilégiant le confort de l'occupant.

On comprend que des positions intermédiaires des réglettes (19, 21) d'ajustement peuvent être exploitées par l'homme du métier qui peut donc adapter la fermeté de la nappe à l'utilisation qu'il souhaite faire du siège. De préférence, les lattes (17) présentent au moins un marqueur de position pour le prépositionnement de la ou des réglettes (19, 21) d'ajustement en des emplacements prédéfinis assistant le monteur dans leur positionnement. Eventuellement, au moins un marqueur comprend un relief s'opposant à la translation d'au moins une réglette (19, 21). Le relief peut faire office de butée interdisant son dépassement. Le relief peut également faire office de marqueur offrant une légère résistance ressentie par le monteur et pouvant être surmontée pour le passage à une position suivante. Afin de répartir au mieux les efforts et d'offrir une fermeté homogène sur toute la largeur du siège, les réglettes (19, 21) sont disposées symétriquement de part et d'autre de l'axe central transversal aux lattes (17).

Dans notre exemple, la fermeté de la nappe d'assise est déterminée par le monteur et fixée une fois pour toute pour les sièges. Néanmoins, selon une variante de l'invention non représentée, l'occupant peut faire évoluer lui-même la fermeté de son siège en fonction de ses envies en faisant coulisser les réglettes d'ajustement le long des lattes. Pour ce faire, l'armature comprend des moyens d'entraînement de la ou des réglettes coopérant avec des moyens complémentaires présentés par la ou lesdites réglettes. Les moyens d'entrainement sont configurés pour entraîner la ou les réglettes en translation le long des lattes dans un sens ou dans l'autre. Lorsque les réglettes sont au nombre de deux, les réglettes sont entraînées selon des sens opposés. Elles s'éloignent l'une de l'autre lorsqu'elles sont déplacées en direction des extrémités des lattes. Elles se rapprochent l'une de l'autre lorsqu'elles sont déplacées en direction de l'axe central. Le déplacement des réglettes peut être effectué manuellement ou de manière motorisée.

Lorsque le déplacement des réglettes est manuel, les moyens d'entraînement comprennent par exemple au moins une tige filetée pouvant être tournée en manoeuvrant au moins une molette. La ou les molettes sont accessibles par exemple sur un flanc du siège. La tige filetée va entraîner les réglettes pour les écarter ou les rapprocher. On aura compris que les réglettes présentent préférentiellement un mouvement symétrique. Le principe de tels mécanismes d'entraînement par tige filetée est connu de l'homme du métier et ne sera donc pas décrit plus avant. Il devient ainsi possible pour l'occupant d'un véhicule d'ajuster la fermeté de maintien de ses sièges, et de choisir le type de confort qu'il préfère.

Lorsque le déplacement des réglettes est motorisé, il est comprend au moins une tige filetée pouvant être mise en rotation dans une sens ou dans l'autre par un moteur dédié. La commande du moteur se trouve par exemple au niveau du tableau de bord du véhicule, ou par exemple sur le siège en lui-même.

Si l'invention est préférentiellement mise en oeuvre avec deux réglettes d'ajustement, elle peut également être mise en oeuvre avec une seule réglette placée en position centrale d'extrémité ou en position latérale d'extrémité. Elle peut également être mise en oeuvre avec trois réglettes ou plus. L'un des avantages de l'emploi de deux réglettes d'ajustement plutôt qu'une seule, est d'offrir une gamme étendue de modifications possibles de la fermeté de la nappe de support.

## Revendications

1. Armature de siège pour véhicule, de préférence automobile, comprenant au moins une nappe de support à lattes, **caractérisée en ce que** les lattes (17) sont reliées entre elles par au moins une réglette (19, 21) d'ajustement mobile en translation le long desdites lattes (17).

2. Armature selon la revendication 1 **caractérisée en ce que** la ou les réglettes (19, 21) sont mobiles entre une position centrale d'extrémité et une position latérale d'extrémité, de préférence la ou les réglettes (19,21) et peuvent prendre n'importe quelle position entre les deux positions centrale et latérale d'extrémité.

3. Armature selon l'une des revendications 1 ou 2 **caractérisée en ce que** les lattes (17) présentent des marqueurs de position pour le prépositionnement des réglettes (19, 21), de préférence, les marqueurs comprennent un relief s'opposant au déplacement d'au moins une réglette (19, 21).

4. Armature selon l'une des revendications 1 à 3 **caractérisée en ce que** la ou les nappes de support sont une nappe d'assise et/ou une nappe de dossier.

5. Armature selon l'une des revendications 1 à 4 **caractérisée en ce que** la nappe de support est suspendue à des éléments (7) transversaux de ladite armature et **en ce que** les lattes (17) sont disposées transversalement par rapport au siège.

6. Armature selon l'une des revendications 1 à 5 **caractérisée en ce qu'**elle comprend en outre des moyens d'entraînement de la ou des réglettes (19, 21) coopérant avec des moyens complémentaires présentés par la ou lesdites réglettes (19, 21) de sorte à déplacer la ou les réglettes (19, 21) en translation le long des lattes (17), de préférence les moyens d'entraînement comprennent au moins une tige filetée.

7. Armature selon la revendication 6 **caractérisée en ce que** l'armature comprend deux réglettes (19, 21) d'ajustement et **en ce que** les moyens d'entrainement sont configurés pour déplacer les réglettes (19, 21) de manière symétrique selon des sens opposés de sorte à modifier leur écartement.

8. Armature selon l'une des revendications 6 ou 7 **caractérisée en ce que** les moyens d'entraînement sont actionnables manuellement.

9. Siège **caractérisé en ce qu'**il comprend une armature selon l'une des revendications 1 à 8.

10. Véhicule **caractérisé en ce qu'**il comprend au moins un siège selon la revendication 9.

## Patentansprüche

1. Sitzrahmen für Fahrzeug, vorzugsweise ein Kraftfahrzeug, der mindestens eine Trägerschicht mit Latten umfasst, **dadurch gekennzeichnet, dass** die Latten (17) miteinander durch mindestens eine Einstellleiste (19, 21), die in Verschiebung entlang der Latten (17) beweglich ist, verbunden sind.

2. Rahmen nach Anspruch 1, **dadurch gekennzeichnet, dass** die Einstellleiste oder Einstellleisten (19, 21) zwischen einer zentralen Endposition und einer seitlichen Endposition beweglich sind, wobei die Einstellleiste oder die Einstellleisten (19, 21) vorzugsweise eine beliebige Position zwischen der zentralen und der seitlichen Endposition einnehmen können.

3. Rahmen nach einem der Ansprüche 1 oder 2, **dadurch gekennzeichnet, dass** die Latten (17) Positionskennzeichnungen zum Vorpositionieren der Leisten (19, 21) aufweisen, wobei die Kennzeichnungen vorzugsweise ein Relief umfassen, das sich dem Verlagern mindestens einer Leiste (19, 21) widersetzt.

4. Rahmen nach einem der Ansprüche 1 bis 3, **dadurch gekennzeichnet, dass** die Trägerschicht oder die Trägerschichten eine Sitzflächenschicht und/oder eine Rückenlehnenschicht sind.

5. Rahmen nach einem der Ansprüche 1 bis 4, **dadurch gekennzeichnet, dass** die Trägerschicht an Querelementen (7) des Rahmens aufgehängt ist, und dass die Latten (17) quer in Bezug zu dem Sitz angeordnet sind.

6. Rahmen nach einem der Ansprüche 1 bis 5, **dadurch gekennzeichnet, dass** er außerdem Antriebsmittel der Leiste oder Leisten (19, 21) umfasst, die mit komplementären Mitteln, die die Leiste oder die Leisten (19, 21) aufweisen, zusammenwirken, so dass die Leiste oder die Leisten (19, 21) in Verschiebung entlang der Latten (17) bewegt werden, wobei die Antriebsmittel vorzugsweise mindestens einen Gewindestift umfassen.

7. Rahmen nach Anspruch 6, **dadurch gekennzeichnet, dass** der Rahmen zwei Einstellleisten (19, 21) umfasst, und dass die Antriebsmittel ausgelegt sind, um die Leisten (19, 21) symmetrisch entlang entgegengesetzter Richtungen derart zu bewegen, dass ihr Abstand geändert wird.

8. Rahmen nach einem der Ansprüche 6 oder 7, **dadurch gekennzeichnet, dass** die Antriebsmittel manuell betätigbar sind.

9. Sitz **dadurch gekennzeichnet, dass** er einen Rahmen nach einem der Ansprüche 1 bis 8 umfasst.

10. Fahrzeug **dadurch gekennzeichnet, dass** es mindestens einen Sitz nach Anspruch 9 umfasst.

## Claims

1. A seat framework for a vehicle, preferably a motor vehicle, including at least one slatted support layer, **characterized in that** the slats (17) are joined together by at least one adjustment strip (19, 21) capable of translational motion along said slats (17).

2. The framework according to Claim 1, **characterized in that** the adjustment strip (s) (19, 21) are movable between a central end position and a lateral end position, preferably the adjustment strip(s) (19, 21) can take up any position between the two central and lateral end positions.

3. The framework according to one of Claims 1 or 2, **characterized in that** the slats (17) have position markers for the pre-positioning of the adjustment strips (19, 21), preferably the markers include a relief opposing the displacement of at least one adjustment strip (19, 21).

4. The framework according to one of Claims 1 to 3, **characterized in that** the support layers are a seat pan layer and/or a seat back layer.

5. The framework according to one of Claims 1 to 4, **characterized in that** the support layer is suspended at transverse elements (7) of said framework and **in that** the slats (17) are disposed transversely with respect to the seat.

6. The framework according to one of Claims 1 to 5, **characterized in that** it further includes driving means of the adjustment strip(s) (19, 21) cooperating with complementary means presented by said adjustment strip(s) (19, 21) so as to move the adjustment strip(s) (19, 21) in translation along the slats (17), preferably the driving means include at least one threaded rod.

7. The framework according to Claim 6, **characterized in that** the framework includes two adjustment strips (19, 21) and **in that** the driving means are configured to move the adjustment strips (19, 21) in a symmetrical manner along opposite directions so as to modify their spacing.

8. The framework according to one of Claims 6 or 7, **characterized in that** the driving means are able to be actuated manually.

9. A seat, **characterized in that** it includes a framework according to one of Claims 1 to 8.

10. A vehicle, **characterized in that** it includes at least one seat according to Claim 9.
